# EUROPEAN PATENT APPLICATION

(11) **EP 1 087 394 A2**
(43) Date of publication of application: **28.03.2001**
(21) Application number: 00118001.7
(22) Date of filing: 22.08.2000
(51) Int. Cl.: G11B 23/03

(54) **Recording capacity gauge, disc housing member and disc tray**

(30) Priority: 01.09.1999 JP 24806499; 01.09.1999 JP 24806699
(71) Applicant: SONY CORPORATION, Tokyo (JP); START LAB INC., Tokyo (JP)
(72) Inventor: Ishii, Hirohisa, c/o Sony Corporation, Tokyo (JP)
(74) Representative: MÜLLER & HOFFMANN Patentanwälte

(57) **Abstract**

A recording capacity gauge for measuring the used capacity value and/or the vacant capacity value of a recording area of an optical disc, such as an optical disc or a magneto-optical disc, is disclosed. The recording capacity gauge includes an engagement unit engaged in a center opening of an optical disc, and a capacity display unit on which graduations corresponding to the format of an optical disc are demonstrated for extending along the radius of the optical disc. The capacity display unit allows for measurement of a used capacity value and/or a vacant capacity value of the optical disc based on a boundary position of the color tone difference between a recorded area and a non-recorded area of the optical disc. A disc tray for accommodating an optical disc is also disclosed.

## Description

### BACKGROUND OF THE INVENTION

### Field of the Invention

This invention relates to a recording capacity gauge for measuring the used capacity value and/or the vacant capacity value of a recording area of an optical disc, such as an optical disc or a magneto-optical disc. This invention also relates to a disc tray for accommodating an optical disc.

### Description of Related Art

Among the optical discs, known to date, there are a CD-R (recordable) in which the information can be written once in a recording area and a CD-RW (rewritable) in which the information can be rewritten. In the CD-R or CD-RW, the information can be incidentally written in the recording area. For example, recording systems, such as track-at-once or packet-write, are used, such that the information can be written in a vacant portion of the recording area.

On the other hand, conventional optical discs are offered to the market as the discs are housed in disc cases. For example, among conventional disc cases, accommodating the CD (compact disc) or the CD-ROM (read-only memory) therein, there is known a case having the thickness of the order of 10 mm.

A conventional disc case is made up of a disc holding member, on which an optical disc is set and held in place, a main casing member, accommodating this disc holding member, and a lid provided for opening/closing relative to the main casing member.

The disc holding member is formed of a resin material as a substantially rectangular plate, and has a mid holding portion adapted for holding a center opening of the optical disc. The outer periphery of the disc holding member is formed integrally with an engagement pawl adapted for detachably engaging with the main casing member.

The main casing member is formed of a transparent resin material as a rectangular member, and has a housing section for accommodating the disc holding member. The housing section is formed integrally with an engagement recess in which is engaged the pawl of the disc holding member, whereby the disc holding member is detachably contained in the housing section.

The lid is formed of a transparent resin material to a rectangular profile and is of a size sufficient to cover the optical disc held by the disc holding member. The lid is formed integrally with a hinge including a pivot rotatably supported by the main casing member. The main casing member includes an opening for supporting the pivot of the lid hinge and rotatably supports the lid via this pivot.

On the inner side of the lid is formed a label housing section for accommodating a first label sheet for displaying the contents of the information recorded on the optical disc accommodated in the disc housing member and a booklet having this first label sheet. This label housing section is formed integrally with plural holding pawls for holding the first label sheet etc.

A second label sheet is arranged astride the back and bottom sides of the main casing member. This second label sheet includes a title label, demonstrating the title of the information contents recorded on the optical disc, and an index label demonstrating the recording contents f the optical disc. The title label and the index label face the back side and the bottom side of the main casing member, respectively.

In the above-described disc case, the optical disc is held by the disc holding member, whilst the lid may be closed relative to the main casing member to accommodate the optical disc therein.

The conventional disc case is utilized in such a manner that, in accommodating a large number of discs side-by-side in a housing shelf or in a casing housing box, the disc cases are arrayed so that only the title labels of the second label sheet, positioned on the back surface side of each disc case, will face outwards to permit the recording contents of the optical disc to be recognized to allow for retrieval only of an optical disc being the necessary title label.

Meanwhile, if the information is to be recorded on the recording area of the CD-R or CD-RW, it is necessary to check whether or not there is sufficient recordable vacant capacity in the recording area.

Heretofore, when the CD-R or the CD-RW is checked as to its recordable vacant capacity, it is necessary to perform a wide variety of operations for confirming the vacant capacity by a computer or the like after loading the CD-R or the CD-RW on a disc drive device. This confirming operation is extremely complex and troublesome, while it is difficult to complete the confirming operations promptly.

In addition, if a CD-R or a CD-RW having a required vacant capacity is to be retrieved from a number of CD-Rs or CD-RWs, the confirming operation tends to be more complex and troublesome.

Moreover, in the conventional disc case, in which the second label sheet is provided on the back and bottom sides of the main casing member as it is clamped by the disc holding member, with the result that, in inscribing a letter on the title label or the index label of the second label sheet, it is disadvantageously necessary to dismantle the disc holding member relative to the main casing member to detach the second label sheet transiently.

Similarly, in the conventional disc case, it is necessary to carry out an operation of accommodating the second label sheet in the main casing member in the main casing member and of re-assembling the disc holding member relative to the main casing member, following the inscription of the recording contents, with the result that the operation of inscribing the recording contents on the second label sheet is complex and troublesome.

So, the conventional disc case suffers a problem that the operation of dismantling and re-assembling necessary for stating the recording contents of the second label sheet become complex and troublesome.

Moreover, in the conventional disc case, in which the width of the back surface of the main casing member, representing the thickness of the main casing member, is of a smaller magnitude, the width of an entry column of the title label of the second label sheet is as small as approximately 6 mm.

So, the conventional disc case suffers the problem that, since the entry column of the title label of the second label sheet is narrower in width, difficulties are met in inscribing letters etc in the entry column.

In the conventional disc case, in which the entry column of the title label of the second label sheet is narrow in width, the inscribed letters are difficult to recognize to render it difficult to retrieve a desired one of a large number of disc cases housed side-by-side.

Moreover, in the conventional disc case, the thickness of a sole disc case is approximately 10 mm, with the result that, if user desires to hold 100 disc cases in a housing shelf, the storage space of 1 m in the thickness direction is required, thus taking up an excessive space.

So, there are many occasions where a user owning CD-Rs simply inscribes the recording contents, such as titles, on a label surface of the CD-R, using a felt pen, or where the user accommodates the CD-Rs in a housing album having holding pouches of a non-woven cloth taking up only a small space, thus worsening the operability in retrieving the desired CD-R to lower the frequency of using the recorded CD-Rs.

If the user accommodates the CD-Rs in the housing album as described above, the disc cases may occasionally be taken as being unneeded.

The conventional disc cases are made up of plural component parts and are costly to manufacture, so that these disc cases may be reasonably used for housing the optical discs having higher marketing costs due to the added value, such as music CDs or CD-ROMs having the images or the computer softwares recorded thereon.

However, since now the marketing cost of the recording CD-R is not more than 1/10 of that of the replay-only CD or CD-ROM, the conventional disc case is not suited to be used for holding the CD-R.

In the above-described CD-R, housed in the disc case, the prime cost accounts for 20% of that of the disc case. This proves hindrance for the manufacturer in diminishing the prime cost, while imposing a load on the user.

Also, in the conventional disc case, the holding capacity is approximately 18m³ per 100,000 cases, with the result that a wide storage space needs to be secured, thus imposing the load on the manufacturer or retail stores or increasing the preservation or transport costs. In ths consideration, a thin disc case with a thickness of approximately 6 mm or an envelope type disc case of paper is used. However, these disc cases cannot be coped with by pre-existing packaging devices, while retrieval performance cannot be improved, with the result that it is difficult to actually use the thin type disc case or disc cases of paper.

In addition, the CD-R held in the conventional disc case is prevalently marketed in packs of ten CD-Rs, so that the manufacturing cost is increased due to packaging of the individual disc cases, while the problem of excess packaging is presented.

### SUMMARY OF THE INVENTION

It is therefore an object of the present invention to provide a recording capacity gauge whereby the used capacity value and/or the vacant capacity value of the recording area of the optical disc can be measured easily.

It is another object of the present invention to provide a disc tray whereby the used capacity value and/or the vacant capacity value of the recording area of the optical disc can be measured easily.

It is yet another object of the present invention to provide a disc tray whereby the packaging configuration of the optical disc can be simplified, the manufacturing cost can be diminished and the title label indicating the recording contents of the optical disc can be easily inscribed to improve the retrieving performance of a desired optical disc.

### BRIEF DESCRIPTION OF THE DRAWINGS

Fig. 1 is a plan view showing a disc tray of the present invention looking from its first surface.
Fig.2 is a side view of the disc tray.
Fig.3 is a plan view showing a disc tray of the present invention looking from its second surface.
Fig.4 is a plan view for illustrating a capacity display unit provided on the disc tray.
Fig.5 is a plan view showing the state of an optical disc housed in the disc tray, looking from its first surface.
Fig.6 is a plan view showing the state of an optical disc housed in the disc tray, looking from its second surface.
Fig.7 is a plan view showing another disc tray from its first surface.
Fig.8 is a side view showing the disc tray of Fig.7.
Fig.9 is a plan view showing the disc tray of Fig.7 from its first surface.
Fig. 10 is a plan view showing the state of an optical disc housed in the disc tray of Fig.7, looking from its first surface.
Fig. 11 is a plan view showing the state of an optical disc housed in the disc tray of Fig. 7, looking from its second surface.
Fig. 12 is a cross-sectional view showing another holding portion provided on the disk tray.
Fig. 13 is a plan view showing a recording capacity gauge.

### DESCRIPTION OF THE PREFERRED EMBODIMENTS

Referring to the drawings, preferred embodiments of a disc tray and a recording capacity gauge according to the present invention will be explained in detail.

This disc tray is used for housing an optical disc, such as a CD-R (Recordable) on which the information can be written once, or a CD-RW (Rewritable), on which the information can be rewritten. Of course, the disc tray can be used for housing other different optical discs, such as replay-only CD (Compact Disc) carrying pre-recorded information, a CD-ROM (read-Only Memory) or DVD (Digital Versatile Disc).

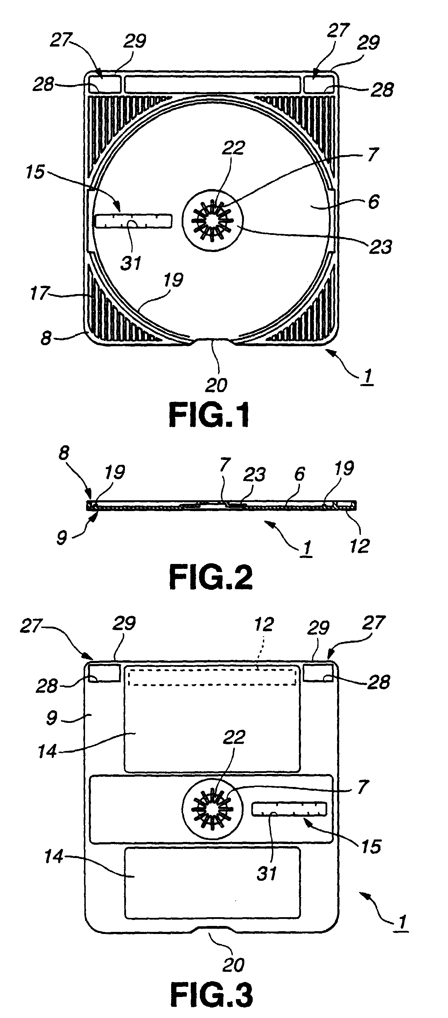

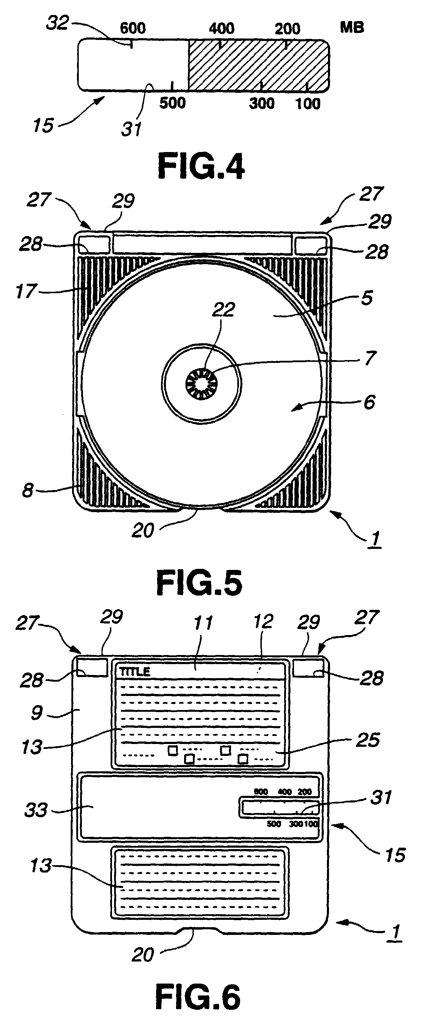

A disc tray 1 is formed of a resin material to a substantially rectangular flat plate profile, and is of a thickness of the order of 4 mm, as shown in Figs. 1 and 2. This disc tray 1 has a disc holding recess 6, in which to accommodate an optical disc 5, and a holder 7 for holding a center opening of the optical disc 5, as shown in Figs. 1 and 2. The disc tray 1 also includes a title indicator 12 on which is bonded a title label 11 indicating the title of the recording contents of the optical disc 5 and an index indicator 14 on which is bonded an index label 13 showing details of the index or memoranda to the recording contents of the optical disc 5, as shown in Figs.3 and 6. The disc tray 1 also includes, on a bottom surface of the disc holding recess 6, a capacity indicator 15 for measuring the used capacity value and a vacant capacity value of the recording area of the optical disc 5, held in the holder 7, as shown in Figs.3, 4 and 6.

The disc holding recess 6 is formed on a first surface 8 of the disc tray 1 to the profile of a circle inscribing the outer rim of the disc tray 1, as shown in Figs. 1, 2 and 5. The disc holding recess 6 is of a diameter slightly larger than the diameter of the optical disc held therein. The disc tray 1, which is of a reduced thickness, is formed integrally with plural linear reinforcement ribs 17 extending between the outer rim of the disc tray 1 and the outer rim of the disc holding recess 6 to assure mechanical strength, as shown in Fig. 1. The optical disc 5 is housed in this disc holding recess 6 so that its light transmitting layer side, irradiated with the laser light, will be directed to the bottom surface of the disc tray 1.

On the bottom surface of the disc holding recess 6 is integrally formed a substantially toroidally-shaped supporting projection 19, facing the outer rim of the recording area of the optical disc 5 held in the disc holding recess 6, as shown in Figs. 1 and 2. The supporting projection 19 is positioned so that a pre-set gap is provided between it and the light transmitting layer of the optical disc 5. This supporting projection 19 is formed as a continuous circle extending along the outer rim of the optical disc 5 and is substantially of a toroidal profile, except that it is interrupted by a cut-out 20, as will be explained subsequently.

The supporting projection 19 compresses against the outer rim of the optical disc 5 to support it when a load is applied from outside to the optical disc 5 housed in the disc holding recess 6 to reliably prohibit the light transmitting layer of the optical disc 5 from compressing against the bottom of the disc holding recess 6 to prevent possible destruction of the recording area of the optical disc 5.

In the outer rim of the disc holding recess 6 is formed the cut-out 20, so that a portion of the outer rim of the optical disc 5 housed in the disc holding recess 6 faces outwards, as shown in Fig. 1. The cut-out 20 is provided at a position inscribing the outer rim of the disc tray 1 and is used for taking out the optical disc 5 contained in the disc holding recess 6.

The holder 7 is provided centrally of the bottom surface of the disc holding recess 6, and is formed integrally with plural elastically flexible radially extending engagement pawls 22, as shown in Figs. 1 and 2. On the outer rim side of the holder 7, the disc tray 1 is formed integrally with a support 23 for supporting the outer rim portion of the center opening of the optical disc 5, carried by the holder 7, as shown in Figs.1 and 2.

The title indicator 12 is provided as a substantially strip-shaped region neighboring to the disc holding recess 6, for facing the outer rim of the disc tray 1, as shown in Figs.2 and 6. The title indicator 12 is formed as a planar surface on a second surface 9 of the disc tray 1. The title indicator 12 is a substantially strip-shaped area, with a width of the order of, for example, 10 mm, which is necessary and sufficient to permit inscription of letters in the title entry column of the title label 11. It is of course possible to enter the information other than the title of the recording contents, such as memoranda.

Since the title indicator 12 is formed to a reduced thickness, plural linear reinforcement ribs may be formed integrally with the first surface 8 not bearing the title label 11 to assure mechanical strength, if so desired.

The index indicator 14 is formed as a planar surface on the second surface 9 of the disc tray 1, as shown in Figs.3 and 6.

The title label 11 and the index label 13, affixed to the title indicator 12 and to the index indicator 14, respectively, are each in the form of a sticker sheet having an adhesive layer. The title label 11 is provided with a substantially strip-shaped title column in register with the title indicator 12. The index label 13 is provided with a collating column 25 in which to enter marks corresponding to the information recording system for e.g., the CD-R or the CD-RW, as shown in Fig.6. The title label 11 and the index label 13 may also be integrated to a sole label, if so desired.

The disc tray 1 is also provided with take-out operating portions 27, for facilitating the taking out of the disc tray 1 contained in a tray housing casing, on both sides in the width-wise direction thereof, with the title indicator 12 in-between, as shown in Fig. 1. The take-out operating portions 27 are each provided with a substantially rectangular opening 28 into which to insert the finger of a user. The disc tray 1 can be easily taken out by intruding the finer end into the opening 28 to hold an outer rim 29 of the opening 28. Although the take-out operating portions 27 is formed as the opening 28, it may also be formed as a recess having an inner wall in an opening or as a protuberance or a groove formed on the outer rim of the disc tray 1.

These take-out operating portions 27 are provided on both sides of the title indicator 12 to permit facilitated taking-out operation irrespective of whether the user is a right-handed or left-handed and to permit the disc tray 1 to be taken out no matter whether it is the first surface 8 or the second surface 9 of the disc tray 1 housed in the tray housing casing that is facing outwards.

The capacity indicator 15 includes an aperture 31 for exposing a portion of the recording area of the optical disc 5 housed in the disc holding recess 6 to outside across the innermost side and the outermost sides of the disc and graduations 32 provided for extending along the radius of the disc adjacent to the aperture 31 at a pre-set interval associated with the format of the optical disc 5, as shown in Figs. 1, 3 and 4.

The aperture 31 is in the form of a rectangular slit, extending parallel to the longitudinal direction of the title indicator 12, corresponding to the width-wise direction of the disc tray 1, as shown in Fig.4.

The graduations 32 are formed integrally for being protruded as protuberances into the inside of the aperture 3. If the optical disc 5 housed in the disc tray 1 is a CD-R or a CD-RW, the graduations 32 are formed so that the numerical value indication thereof will be decreased at a step of 100 MB (megabytes) from an end of the graduations corresponding to the inner rim side of the recording area of the optical disc 5 towards the other end of the graduations corresponding to its outer rim side. The graduations 32 may also be recessed, while the indication of numerical values may be on the disc tray 1.

In the capacity indicator 15, a measurement label 33, carrying the printed indication at a pre-set interval corresponding to the graduations 32, is stuck in the vicinity of the aperture 31. The measurement label 33 is formed as a so-called sticker sheet carrying an adhesive layer.

Meanwhile, the CD-R or the CD-RW has a dye layer or a phase change layer, as an information recording layer. The color tone of the information recording layer is changed as the information is recorded from the inner rim towards the outer rim of the recording area by way of recording the information in the recording area. Thus, in this CD-R or CD-RW, the used area, where the information has been recorded, and the vacant area, where the information has not been recorded, can be recognized by the difference in color tone, on viewing the recording area.

In the above-described capacity indicator 15, in which the recording area of the optical disc 5 housed in the disc holding recess 6 can be viewed through the aperture 31, the vacant capacity value, as the residual capacity, corresponding to the recordable recording area, can readily be recognized by measuring the boundary position of the color tone difference in the recording area, based on the graduations.

Therefore, if, in this capacity indicator 15, the magnitude of the recordable vacant capacity of the CD-R or the CD-RW is to be recognized, the painstaking operation of capacity checking by a computer on loading the CD-R or the CD-RW on the disc drive device may be dispensed with to permit the vacant capacity to be grasped readily.

Although the above-described capacity indicator 15 is provided with a display which permits measurement of the vacant capacity value of the recording area, it is of course possible to provide a display which permits measurement of the used capacity value.

Although the capacity indicator 15 is formed as the aperture 31, it is unnecessary to provide the aperture 31 if the disc tray 1 in its entirety or the disc holding recess 6 is formed of a light transmitting material. The capacity indicator 15 may also be comprised of a panel or sheet material of a UV cut-off light transmitting material, which is built into the aperture 31.

Although not shown, plural sorts of graduations, associated with plural sorts of the optical discs having different formats, may be provided in the capacity indicator 15. There may also be provided graduations associated with recording areas of the optical discs of different diameters.

The disc tray may also be provided with plural capacity indicators associated respectively with plural sorts of the optical discs having different formats.

The state in which the optical disc 5 is housed in the disc holding recess 6 in the above-described disc tray 1 is hereinafter explained with reference to the drawings.

Referring to Fig.5, the optical disc 5 is housed in the disc holding recess 6 of the disc tray 1, with the light transmitting layer side of the optical disc 5 facing the bottom surface of the disc holding recess 6, and has its center opening held by the holder. The optical disc 5, housed in the disc holding recess 6, has its portion outside the center opening set on the support 23. If a load is applied from outside on the optical disc 5 housed in the disc holding recess 6, the optical disc 5 is supported with the outer rim of the recording area thereof resting on the supporting projection 19, thus reliably protecting the recording area of the optical disc 5.

With the disc tray 1, its recording area can be viewed through the aperture 31 of the capacity indicator 15, as the optical disc 5 is housed in the disc holding recess 6, as shown in Fig.6. Therefore, the vacant capacity of the optical disc 5 can be grasped readily by measuring the boundary position of the different in the color tone of the recording area of the optical disc 5 by the capacity indicator 15.

With the disc tray 1, as described above, the packaging configuration for the optical disc 5 can be simpler to provide a small-sized disc tray of a reduced thickness. Thus, with the disc tray 1, the housing space can be reduced appreciably.

Moreover, with the present disc tray 1, the used capacity value and/or the vacant capacity value of the optical disc 5 housed in the disc holding recess 6 can be measured by the capacity indicator 15, the used capacity value and/or the vacant capacity value can be grasped readily and promptly.

In the above-described disc tray 1, the title label 11, index label 13 or the measurement label 33 are stuck with an adhesive. Referring to the drawings, an alternative structure of the disc tray, which permits label sheets indicating the recording contents of the optical disc 5 to be exchanged readily, is explained. Since the present disc tray has the basic structure in common with the above-described disc tray 1, the same parts or components are depicted by the same reference numerals and the corresponding description is omitted for simplicity. 64.

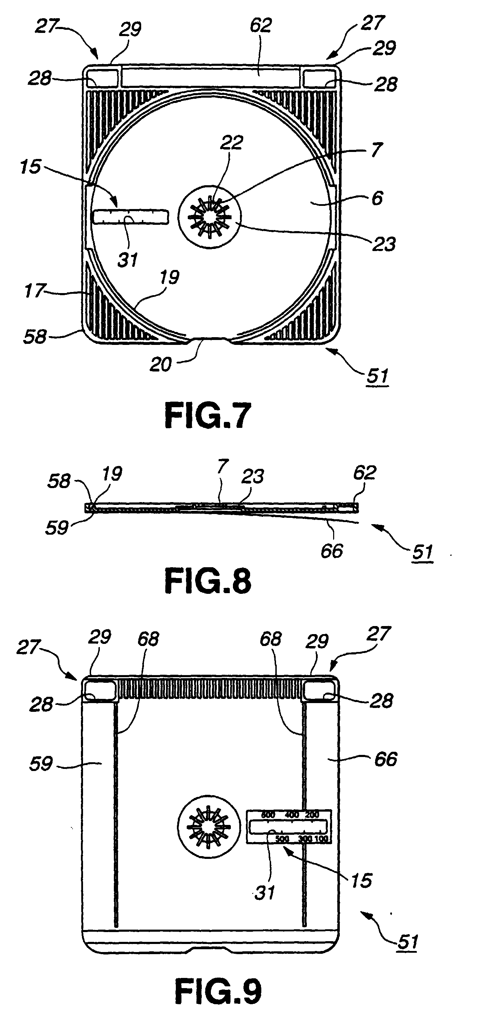

A disc tray 51 has a title indicator 62, on which is stuck a title label 61, showing titles of the recording contents of the information recorded on the optical disc 5 housed in the disc holding recess 6, and an index indicator 64, which is provided with a label sheet 63 showing the indices and memoranda for the recording contents of the optical disc 5, as shown in Figs.7 to 11.

The title indicator 62 is formed as a planar surface on a first surface 58 of the disc tray 51, as shown in Figs. 7, 8 and 11. The index indicator 64 is formed on a second surface 59 of the disc tray 51, and a film sheet 66 for clamping a label sheet is provided between the index indicator 64 and the second surface 59.

On the label sheet 63 are printed a title entry column for the recording contents of the information recorded on the optical disc 5, an index entry column and a picture etc. The label sheet 63 is arranged so that the title entry column overlies the title indicator 62.

A film sheet 66 is formed of a resin material exhibiting light transmitting properties and is of a toughness sufficient to hold the label sheet 63 in a sandwiched state between the second surface 59 of the disc tray 51 and the film sheet 66.

The film sheet 66 is of an area sufficient to cover the entire surface of the label sheet 63 and is slightly smaller in outer size slightly than the disc tray 51, as shown in Fig.9. The lateral side end of the film sheet 66 is stuck to the lateral side end of the second surface 59 of the disc tray 51 in register with the title indicator 62, as shown in Fig.8 and 9.

Since the film sheet 66 can be elastically deformed from one lateral side end relative to the first surface 59 of the disc tray 51 by way of folding, the label sheet 63 can be readily introduced into or withdrawn from the spacing between the film sheet 66 and the disc tray 51.

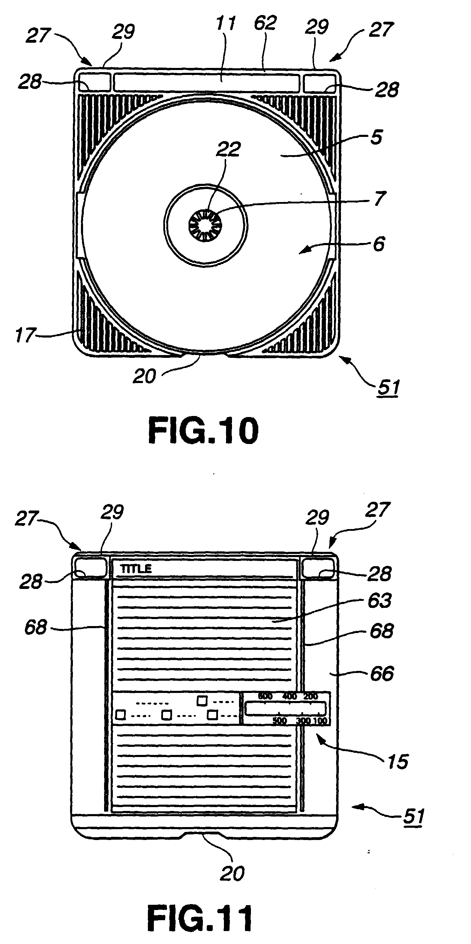

In the second surface 59 of the disc tray 51 are formed a pair of linear guide grooves 68, 68 for arranging the label sheet 63 in position, as shown in Figs.9 and 11. The disc tray 51 can be mounted in position readily by positioning the label sheet 63 in the guide grooves 68, 68 and by holding the label sheet 63 by the film sheet 66.

In the above-described alternative structure of the disc tray 51, provided with the film sheet 66 detachably holding the label sheet 63, the label sheet 63 can be exchanged readily.

The holder 7 of the disc tray 1 or 51 has, in its second surface 9 or 59, a recess opening in register with the proximal end of the support 23 or the engagement pawl 22 on the first surface 8 or 58. Alternatively, the holder 7 may be replaced by another holder having the recess of a smaller opening diameter.

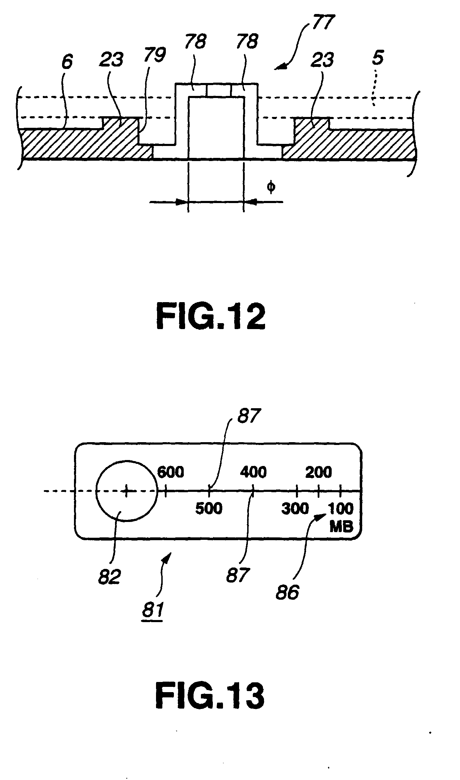

An alternative holder 77 is provided with plural engagement pawls 78 formed integrally with the disc holding recess 6 and which may be elastically flexible, as shown in Fig. 12. These engagement pawls 78 are formed at the proximal ends thereof with recesses 79 whereby the engagement pawls 78 are formed for extending along the second surface 9 or 59, as shown in Fig. 12. Moreover, the elastically flexible portions are formed parallel to the direction of thickness of the optical disc 3, whereby it is possible to reduce the opening diameter ⌀ of the recess opening in the second surface 9 or 59.

Thus, with the present holder 77, in which the recess defined by the engagement pawls 78 is of a reduced opening diameter ⌀, the planar portion supporting the mid portions of the measurement label 33 or the label sheet 63 provided on the index indicators 14, 64 is increased in area, with the result that mechanical strength of the mid portions of the measurement label 33 or the index label and the label sheet 63 formed integrally with the measurement label is assured.

Although not shown, the above-described disc tray 1, 51 may be housed in the main casing member and a lid may be provided for opening/closure on the main casing member to cover the disc holding recess of the disc tray to provide a disc case.

The above-described disc tray 1 or 51 is arranged to measure the vacant capacity value of the optical disc 5 holding the optical disc 5. A recording capacity gauge 81 for measuring the used capacity value and/or the vacant capacity value of the optical disc 5 is hereinafter explained.

The recording capacity gauge 81 is formed of e.g., a light transmitting resin material, as a flat plate of a length extending to the outer rim along the radial direction of the recording area of the optical disc 5, as shown in Fig.13. On one end of the recording capacity gauge 81 is integrally protuberantly formed a substantially cylindrical engagement portion 82 engaging in the center opening of the optical disc 5. The major surface of the recording capacity gauge 81 is provided with graduations 87 along the radius of the disc 5, in keeping with the format of the optical disc 5. A capacity display 86 for measuring the used capacity value and/or the vacant capacity value of the optical disc 5 is provided for extending along these graduations 87.

The graduations 87 are provided on a straight line, extending along the radius of the optical disc 5, so that the straight line will traverse the center point of the center opening of the optical disc 5. The capacity display 86 is provided so that the display value is decreased at steps of 100 MB from its one end corresponding to the inner rim of the recording area of the optical disc 5 to its opposite end corresponding to its outer rim. On the major surface of the recording capacity gauge 81, there may be provided plural graduations and display indications associated with plural optical discs of different formats, as appropriate.

In measuring the used capacity value and/or the vacant capacity value of the optical disc 5, the recording capacity gauge 81, constructed as described above, has its engagement portion 82 engaged in the center opening of the optical disc 5, so that the graduations 87 and the capacity display 86 face the light transmitting layer of the optical disc 5.

With the recording capacity gauge 81, the vacant capacity of the recording area of the optical disc 5 is confirmed by measuring the boundary position by the color tone difference of the recorded area and the non-recorded area of the optical disc 5, using the graduations 86 provided along the radius of the recording area of the optical disc 5 and the capacity display 87.

In the above-described recording capacity gauge 81, the used capacity value and/or the vacant capacity value of the optical disc 5 can be measured and confirmed readily. Thus, with the present recording capacity gauge 81, it is possible to improve the operability in retrieving the optical disc 5 having a desired vacant capacity from plural optical discs.

In the above-described recording capacity gauge, according to the present invention, the used capacity value and/or the vacant capacity value of the optical disc 5 can readily be measured and confirmed.

On the other hand, with the disc housing member according to the present invention, the used capacity value and/or the vacant capacity value of the optical disc 5, housed in the disc holding recess, can readily be measured and confirmed.

Moreover, in the disc tray according to the present invention, the packaging configuration for the optical disc can be simplified and reduced in size and thickness. Thus, with the present disc tray, the housing space can be diminished, while the manufacturing cost can be lowered. In addition, with the present disc tray, desired optical discs can be retrieved more expeditiously.

## Claims

1. A recording capacity gauge comprising:
an engagement unit engaged in a center opening of an optical disc; and
a capacity display unit on which graduations corresponding to the format of an optical disc are demonstrated for extending along the radius of the optical disc;
said capacity display unit allowing for measurement of a used capacity value and/or a vacant capacity value of the optical disc based on a boundary position of the color tone difference between a recorded area and a non-recorded area of the optical disc.

2. The recording capacity gauge according to claim 1
wherein
plural graduations corresponding to plural sorts of optical discs with different formats are demonstrated on said capacity display unit.

3. A disc housing member comprising:
a disc holding recess for accommodating an optical disc therein;
a holder for holding a center opening of an optical disc accommodated in said disc holding recess;
a visual check unit provided in register with a light transmitting surface of the optical disc accommodated in said disc holding recess to permit a portion of the recording area of the optical disc to be viewed across the inner and outer rims of the optical disc; and
a capacity display unit including graduations provided in the vicinity of said visual check unit for extending along the radius of the optical disc, said graduations being in keeping with the format of the optical disc;
said capacity display unit allowing for measurement of a used capacity value and/or a vacant capacity value of the optical disc based on a boundary position of the color tone difference between a recorded area and a non-recorded area of the optical disc.

4. The disc housing according to claim 3
wherein
said visual check unit is opened as a slit in the disc holding recess.

5. The disc housing member according to claim 3
wherein
said visual check unit is formed of a light transmitting material.

6. The disc housing member according to claim 3
wherein
plural graduations corresponding to plural sorts of optical discs with different formats are demonstrated on said capacity display unit.

7. The disc housing member according to claim 3
wherein
said disc holding recess is formed of a light transmitting material.

8. The disc housing member according to claim 3
wherein
the disc housing member includes a main casing member of a light transmitting material, provided with said disc holding recess, and a lid provided for opening/closure on said main casing member for covering said disc holding recess.

9. A disc tray comprising:
a disc holding recess provided in a first surface for accommodating an optical disc therein;
a holding portion for holding a center opening of the optical disc accommodated in said disc holding recess; and
a first label indicating unit provided adjacent to the outer rim of at least one of said first surface and a second surface, said first label indicating unit carrying a first display label demonstrating the recording contents of the information recorded on said optical disc.

10. The disc tray according to claim 9
wherein
a cut-out for exposing a portion of the outer rim of the optical disc accommodated in said disc holding recess is formed on the outer rim of said disc holding recess.

11. The disc tray according to claim 9
wherein
a second display label for demonstrating the recording contents of the information recorded on the optical disc is provided on the second surface of said disc tray.

12. The disc tray according to claim 9
wherein
a light transmitting film sheet is provided on the second surface of said disc tray for sandwiching a label sheet between it and the second surface for displaying the recording contents of the information recorded on the optical disc, said light transmitting film sheet permitting said label sheet sandwiched between it and the second surface to be seen through.

13. The disc tray according to claim 9
wherein
an operating unit is provided adjacent to said first label indicator on the disc tray for inserting or removing said disc tray for a tray holding member accommodating said disc tray.

14. The disc tray according to claim 9
wherein
a protection projection for protecting a recording area is provided in said disc holding recess for facing the outer rim side of a recording area of the optical disc held by said holder, said protection projection defining a gap between it and the recording area.

15. The disc tray according to claim 14
wherein
a cut-out is formed in the outer rim of said disc holding recess for exposing a portion of the outer rim of the optical disc accommodated in said disc holding recess;
said protection projection being formed continuously along the outer rim of the optical disc except said cut-out, whereby said cut-out is of a substantially toroidal shape interrupted by said cut-out.
